# EUROPÄISCHE PATENTSCHRIFT

(11) **EP 1 462 683 B1**
(45) Veröffentlichungstag und Bekanntmachung des Hinweises auf die Patenterteilung: **21.05.2008**
(21) Anmeldenummer: 04006757.1
(22) Anmeldetag: 20.03.2004
(51) Int. Cl.: F16H 63/48, H01F 7/18

(54) **Vorrichtung und Verfahren zur Steuerung eines Parksperren-Haltemagneten eines Kraftfahrzeuggetriebes**
Device and method to control a hold magnet of a park-lock mechanism of a vehicle transmission
Dispositif et procédé de commande d'un aimant d'arret d'un frein de stationnement d'une boîte de vitesses

(30) Priorität: 26.03.2003 DE 10313379
(43) Veröffentlichungstag der Anmeldung: 29.09.2004
(73) Patentinhaber: LuK Lamellen und Kupplungsbau Beteiligungs KG, 77815 Bühl (DE)
(72) Erfinder: Lindenschmidt, Christoph, 76287 Rheinstetten (DE); Berger, Reinhard, Dr., 77815 Bühl (DE); Schweizer, Alexander, 75045 Walzbachtal-Jöhlingen (DE); Zimmemann, Martin, 77880 Sasbach (DE)
(74) Vertreter: Duschl, Edgar Johannes

(56) Entgegenhaltungen:
- EP-A- 0 627 753
- DE-A1- 19 820 920
- GB-A- 1 119 957
- US-B1- 6 471 027

## Beschreibung

Die vorliegende Erfindung betrifft eine Vorrichtung zur Steuerung eines elektrisch betätigten Haltemagneten einer Parksperre eines Kraftfahrzeugs, wie aus der DE 198 20 920 bekannt, wobei der Haltemagnet mittels der Getriebesteuerung angesteuert wird, bei der eine Rücksetzung in eine Grundeinstellung (Reset) möglich ist. Die Erfindung betrifft darüber hinaus auch eine elektrische Schaltung mit einer Spannungsquelle und einem elektrisch betätigten Haltemagneten sowie ein Verfahren zur Steuerung eines elektrisch betätigten Haltemagneten einer Parksperre eines Kraftfahrzeuggetriebes, wobei der Haltemagnet über eine Getriebesteuerung angesteuert wird.

Bei dem vorstehend erwähnten Kraftfahrzeuggetriebe kann es sich um ein Getriebe beliebiger Bauart handeln, welches lediglich dadurch näher gekennzeichnet ist, dass es eine Parksperre aufweist. So ist es beispielsweise möglich, dass es sich dabei um ein Doppelkupplungsgetriebe handelt und insbesondere um ein sogenanntes Parallelschaltgetriebe.

Die Parksperre eines solchen Getriebes weist üblicherweise eine Parksperrklinke auf, die die mit dem Triebstrang des Fahrzeugs verbundene Abtriebswelle des Getriebes blockieren kann.

Für den Gangwechsel bei einem solchen Getriebe ist mindestens ein Getriebeaktor vorgesehen, der auch dazu verwendet werden kann, die Parksperrklinke aktiv einzulegen und auszulegen. Dieser Getriebeaktor benötigt eine Antriebsenergie, beispielsweise elektrischen Strom aus dem Fahrzeugbordnetz. Wenn nun eine Notfallsituation eintritt derart, dass die Fahrzeugbordspannung ausfällt, kann der Getriebeaktor die Parksperre nicht mehr aktiv einlegen. Um dieses Problem zu beseitigen ist es auch bereits bekannt geworden, die Parksperrklinke mittels eines Federspeichers einzulegen und sie mittels des Getriebeaktors auszulegen. Die so betätigte Parksperre kann während der Fahrt des Fahrzeugs mittels eines elektrisch betätigten Haltemagneten aktiv offen gehalten werden.

Wie es vorstehend bereits erwähnt wurde, weist die Lösung, die Parksperrenklinke mittels eines Federspeichers einzurücken, den Vorteil auf, dass die Parksperre auch beim Stromausfall eingelegt werden kann. Der zum Offenhalten der Parksperrklinke vorgesehene Haltemagnet kann beispielsweise mittels der Getriebesteuerung angesteuert werden, bei der es sich um eine elektronische Steuerung handeln kann. Solche elektronischen Steuerungen können mittels eines Resets in eine fest definierte Grundeinstellung zurückgesetzt werden. Während des Resets kann die Getriebesteuerung keine Steuersignale an den Haltemagneten ausgeben, so dass die Möglichkeit besteht, dass der Haltemagnet während des Resets nicht mit Strom versorgt wird und daher die Parksperrklinke mittels des Federspeichers eingelegt werden könnte.

Ein solcher Rest kann selbstverständlich auch während der Fahrt des Kraftfahrzeugs eintreten, beispielsweise zur Bereinigung eines Fehlerspeichers, so dass Vorkehrungen getroffen werden müssen, dass die Parksperre tatsächlich erst dann eingelegt wird, wenn dies dem Fahrerwunsch entspricht und von der Getriebesteuerung an den Magneten weitergegeben wird oder dann, wenn die Stromversorgung durch die Bordnetzspannung des Fahrzeugs ausfällt und die Parksperrklinke eingelegt werden soll, um ein unbeabsichtigtes Wegrollen des Fahrzeugs zu vermeiden.

Die Parksperre darf aber dann nicht eingelegt werden, wenn kurzzeitig keine Signale von der Getriebesteuerung an den Haltemagneten abgegeben werden, was beispielsweise bei einem Rest der Fall sein kann.

Der vorliegenden Erfindung liegt daher nunmehr die Aufgabe zugrunde, eine Vorrichtung und ein Verfahren zu schaffen, die das unbeabsichtigte Einlegen der Parksperrklinke bei einem kurzzeitigen Ausbleiben von Steuersignalen von der Getriebesteuerung an den Haltemagneten vermeiden, aber gewährleistet ist, dass bei einem Ausfall der Stromversorgung des Fahrzeugs die Parksperre eingelegt wird.

Die Erfindung sieht nun zur Lösung dieser Aufgabe bezüglich der Vorrichtung eine Vorrichtung zur Steuerung eines elektrisch betätigten Haltemagneten einer Parksperre eines Kraftfahrzeuggetriebes vor, bei der ein Haltemagnet, der über eine in eine Grundeinstellung rücksetzbare Getriebesteuerung mit Strom versorgt wird, die Parksperre im ausgelegten Zustand hält und die Vorrichtung eine Einrichtung zur Überbrückung eines Resets der Getriebesteuerung besitzt, die während des Resets die Stromversorgung des Haltemagneten aufrecht erhält.

Vorteilhafte weitere Ausgestaltungen der Erfindung bezüglich der Vorrichtung sind in den weiteren Ansprüchen beschrieben.

Die Erfindung sieht zur Lösung der Aufgabe bezüglich des Verfahrens ein Verfahren vor zur Steuerung eines elektrisch betätigten Haltemagneten einer Parksperre eines Kraftfahrzeuggetriebes, bei dem ein über eine rücksetzbare Getriebesteuerung mit Strom versorgter Haltemagnet die Parksperre im ausgelegten Zustand hält, wobei nach dem Verfahren während eines Resets der Getriebesteuerung die Stromversorgung des Haltemagneten aufrecht erhalten wird.

Vorteilhafte Verfahrensausgestaltungen sind in den weiteren Ansprüchen beschrieben.

Mit der erfindungsgemäßen Vorrichtung und dem erfindungsgemäßen Verfahren wird daher erreicht, dass während eines Resets der Getriebesteuerung die Stromversorgung des Haltemagneten aufrecht erhalten bleibt und ein unbeabsichtigtes Einlegen der Parksperrklinke vermieden werden kann.

Durch die Bestromung des Haltemagneten über die Getriebesteuerung wird erreicht, dass der Haltemagnet die Parksperre im ausgelegten Zustand hält. Wenn nun aber eine Bedingung eintritt die anzeigt, dass die Parksperre eingelegt werden soll, wobei dies beispielsweise dann erfüllt ist, wenn vom Fahrer der Wählhebel in eine Stellung "P" verschoben wird, ist es nach der Erfindung vorgesehen, dass die Einrichtung die Stromversorgung des Haltemagneten in Abhängigkeit von dieser Bedingung, die anzeigt, dass die Parksperre einzulegen ist, unterbricht, so dass die Parksperrenklinke beispielsweise mittels eines Federspeichers aktiv eingerückt wird.

Diese Weiterentwicklung der Erfindung ist deshalb von Vorteil, da eine dem Reset der Getriebesteuerung entsprechende Bedingung, nämlich eine kurzzeitige Unterbrechung der Signalspeisung des Haltemagneten über die Getriebesteuerung zu einer Wartezeit beim Einlegen der Parksperrenklinke führen würde.

Mit der erfindungsgemäß vorgesehenen Weiterbildung der Erfindung, nämlich, dass die Einrichtung die Stromversorgung des Haltemagneten in Abhängigkeit von einer Bedingung unterbricht, die anzeigt, dass die Parksperre einzulegen ist, wird einerseits erreicht, dass bei einem Reset der Getriebesteuerung die Stromversorgung des Haltemagneten aufrecht erhalten bleibt und die Parksperre nicht unbeabsichtigt eingelegt wird, andererseits aber auch dann, wenn die Parksperre eingelegt werden soll - entsprechend dem Fahrerwunsch - dies sofort und ohne Verzögerung geschieht.

Nach einer vorteilhaften Weiterbildung der Erfindung weist die Einrichtung ein rückfallverzögertes Zeitrelais auf, dessen Rückfallverzögerungszeit in Abhängigkeit von der Reset-Zeitdauer einstellbar ist, und das während des Resets die Stromversorgung des Haltemagneten aufrecht erhält.

Es bedeutet dies mit anderen Worten, dass das rückfallverzögerte Zeitrelais die Stromversorgung des Haltemagneten in einem Notfall, beispielsweise einem Ausfall der Bordnetzspannung unterbricht, so dass der Haltemagnet die Parksperrklinke frei gibt und diese eingerückt werden kann, nicht aber während der Zeitdauer eines Resets der Getriebesteuerung, da die Rückfallverzögerungszeit des Zeitrelais größer gewählt ist als die Reset-Zeitdauer.

Nach einer Weiterbildung der Erfindung kann anstelle des rückfallverzögerten Zeitrelais auch eine elektrische Schaltung mit einem Energiespeicher vorgesehen sein, über dessen Energieabgabe während des Resets die Stromversorgung des Haltemagneten aufrechterhalten bleibt.

Bei dem elektrischen Energiespeicher kann es sich beispielsweise um einen Kondensator handeln, der durch das Bordnetz des Kraftfahrzeugs aufgeladen wird und der während eines Resets der Getriebesteuerung seine elektrische Energie beispielsweise an ein Stromverstärkungsbauteil abgibt, über das der Haltemagnet auch während des Resets aus der Bordspannung mit Haltestrom versorgt wird.

Nach einer weiteren vorteilhaften Ausgestaltung der Erfindung kann die Einrichtung ein Relais oder einen Transistor aufweisen, das beziehungsweise der in Abhängigkeit von einer Bedingung, die anzeigt, dass die Parksperre einzulegen ist, bestromt ist und damit den Stromkreis des Haltemagneten unterbricht.

Es wird mit diesem Relais oder Transistor mit anderen Worten erreicht, dass der Haltestromkreis des Haltemagneten über eine Bestromung des Relais beziehungsweise Transistors aktiv unterbrochen wird, wenn dies dem Fahrerwunsch entspricht und damit eine sofortige Aktivierung der Parksperre erreicht wird.

Nach einer Weiterbildung der Erfindung ist es auch möglich, das vorstehend erwähnte rückfallverzögerte Zeitrelais durch eine elektrische Schaltung zu ersetzen.

Die nach der Erfindung vorgesehene elektrische Schaltung weist eine Spannungsquelle und einen elektrisch betätigten Haltemagneten auf und besitzt einen Mikrokontroller sowie einen Transistor, einen Kondensator und einen Optokoppler, wobei der Mikrokontroller den Transistor zur Steuerung des Optokopplers derart ansteuert, dass der Optokoppler den Versorgungsstrom des Haltemagneten durchschaltet und der Kondensator bei einem Reset der Schaltung den Schaltzustand des Transistors und des Optokopplers während des Resets unverändert aufrecht erhält.

Diese Schaltung kann beispielsweise in die Getriebesteuerung integriert werden und besitzt einen Mikrokontroller, der einen Transistor ansteuert, welcher aktiv gegen Masse schaltet. Bei einem geschalteten Transistor, beispielsweise einem Feldeffekttransistor, wird gleichzeitig der nach der Erfindung vorgesehene Kondensator geladen. Es kann ein Widerstand vorgesehen sein, der den Ladestrom des Kondensators begrenzt. Bei einem Reset des Steuergeräts fällt das Signal des Mikrokontrollers für eine bestimmte Zeit aus, der Kondensator beginnt sich zu entladen und hält den Transistor weiter geschaltet. Mit dem Ausgangsstrom des Transistors kann ein Optokoppler angesteuert werden, der als Stromverstärker wirkt und über den der Haltemagnet während des Resets der Getriebesteuerung mit Haltestrom versorgt wird. Ein unbeabsichtigtes Einrücken der Parksperre während des Resets der Getriebesteuerung kann dadurch vermieden werden.

Nach einer Weiterbildung der Erfindung ist es in Abhängigkeit von der elektrischen Belastbarkeit des oben genannten Transistors auch möglich, ohne einen Optokoppler zu arbeiten. Es bedeutet dies mit anderen Worten, dass der Optokoppler dann auch weggelassen werden kann und der Mikrokontroller den Transistor derart ansteuert, dass der Transistor den Versorgungsstrom des Haltemagneten durchschaltet und der Kondensator bei einem Reset der Schaltung den Schaltzustand des Transistors während des Resets unverändert aufrecht hält, so dass der Haltemagnet über den Transistor mit Strom versorgt wird.

Nach einer Weiterbildung der elektrischen Schaltung kann eine Diode vorgesehen sein, die eine Entladung des Kondensators über den Mikrokontroller verhindert.

Die nach der Erfindung vorgesehene beschriebene elektrische Schaltung kann in eine Vorrichtung zur Steuerung eines elektrisch betätigten Haltemagneten einer Parksperre eines Kraftfahrzeugs integriert werden. Bei dem vorstehend bereits beschriebenen Kraftfahrzeuggetriebe kann es sich um ein Getriebe beliebiger Bauart mit einer Parksperre handeln. Die vorstehend beschriebene Vorrichtung, die während des Resets der Getriebesteuerung die Stromversorgung des Haltemagneten aufrecht erhält und ein rückfallverzögertes Zeitrelais aufweisen kann oder aber auch eine elektrische Schaltung, wie sie vorstehend beschrieben wurde, kann integraler Teil des Kraftfahrzeuggetriebes sein.

Nach der Erfindung ist auch ein Verfahren zur Steuerung eines elektrisch betätigten Haltemagneten einer Parksperre eines Kraftfahrzeuggetriebes vorgesehen, nach dem der Haltemagnet die Parksperre im ausgelegten Zustand hält und der Haltemagnet über eine Getriebesteuerung, die in eine fest definierte Grundeinstellung rücksetzbar ist (Reset), mit Strom versorgt wird, wobei nach dem Verfahren vorgesehen ist, dass während des Resets der Getriebesteuerung die Stromversorgung des Haltemagneten aufrecht erhalten bleibt.

Nach einer Weiterbildung des Verfahrens ist vorgesehen, dass die Stromversorgung des Haltemagneten in Abhängigkeit von einer Bedingung unterbrochen wird, die anzeigt, dass die Parksperre einzulegen ist. Es bedeutet dies mit anderen Worten, dass die Stromversorgung des Haltemagneten sofort unterbrochen wird, wenn eine Bedingung erfüllt ist, die - beispielsweise dem Fahrerwunsch entsprechend - anzeigt, dass die Parksperre sofort einzulegen ist.

Die genannte Bedingung kann über eine vom Fahrer ausgelöste Aktion erfüllt werden, beispielsweise einem Verschieben des Wählhebels durch den Fahrer in die Stellung "P" oder aber auch beispielsweise durch ein Abziehen des Zündschlüssels des Fahrzeugs im Stillstand bei betätigter Fahrzeugbremse, so dass erkannt wird, dass der Fahrer ein sofortiges Einlegen der Parksperre wünscht und somit nach dem erfindungsgemäßen Verfahren die Stromversorgung des Haltemagneten sofort unterbrochen wird und die Parksperre beispielsweise mittels eines Federspeichers eingelegt werden kann.

Die Erfindung wird im folgenden anhand der Zeichnung näher erläutert. Diese zeigt in
Fig. 1 schematisch eine Darstellung der Vorrichtung nach der Erfindung gemäß einer ersten Ausführungsform; und
Fig. 2 gemäß einer zweiten Ausführungsform.

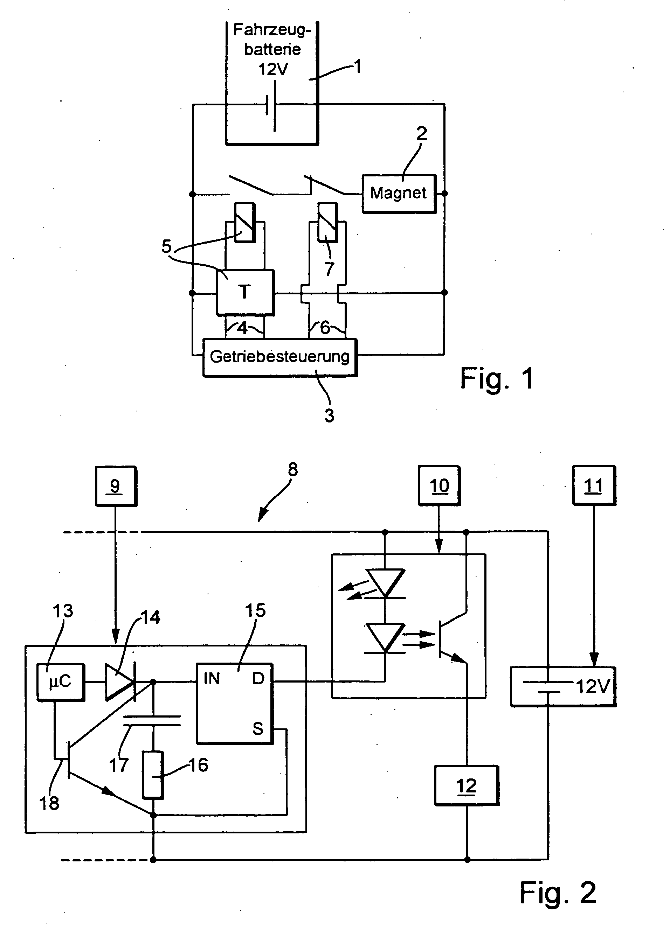

Fig. 1 der Zeichnung zeigt in einer schematischen Darstellung eine Vorrichtung zur Steuerung eines elektrisch betätigten Haltemagneten gemäß einer ersten Ausführungsform nach der Erfindung. Eine Fahrzeugbatterie 1 stellt die zur Versorgung eines elektrisch betätigten Haltemagneten 2 erforderliche Energie zur Verfügung.

Der Haltemagnet 2 dient im bestromten Zustand dazu, eine nicht näher dargestellte Parksperrklinke im ausgelegten, das heißt, offenen Zustand zu halten. In dem von der Fahrzeugbatterie 1 aufgespannten Versorgungsstromkreis befindet sich eine Getriebesteuerung 3, die dazu ausgebildet ist, den Haltemagneten 2 zu betätigen. Mit einem ersten Ausgang 4 der Getriebesteuerung 3 ist ein rückfallverzögertes Zeitrelais 5 verbunden derart, dass der Stormkreislauf des Haltemagneten 2 über das Zeitrelais 5 gesteuert geöffnet und geschlossen werden kann.

An einem zweiten Ausgang 6 der Getriebesteuerung 3 ist ein zweites Relais 7 angeschlossen, welches über die Getriebesteuerung 3 mit Strom versorgt werden kann.

Die Funktionsweise des zweiten Relais 7 ist dabei derart, dass durch Bestromen des zweiten Relais 7, das heißt Versorgung des zweiten Relais 7 mit Strom, der Stromkreislauf des Haltemagneten 2 geöffnet werden kann, so dass diese Bestromung dafür sorgt, dass ein nicht näher dargestellter Federspeicher die Parksperrenklinke einrückt und somit die Parksperre aktiviert.

Es bedeutet dies mit anderen Worten, dass von der Getriebesteuerung 3 das Relais 7 wahlweise mit Strom versorgt werden kann, um den Stromkreislauf des Magneten 2 zu öffnen oder zu schließen. Wenn das Relais 7 mit Strom versorgt wird, wird der Stromkreislauf des Haltemagneten 2 geöffnet und die Parksperre aktiviert. Wenn die Getriebesteuerung über den Ausgang 6 das zweite Relais 7 nicht mit Strom versorgt, dann bleibt der Stromkreislauf des Haltemagneten 2 geschlossen und auf diese Weise die Parksperrenklinke im ausgerückten Zustand gehalten. Dies entspricht beispielsweise dem Zustand, dass sich das mit der erfindungsgemäßen Vorrichtung ausgestattete Kraftfahrzeug im normalen Fahrbetrieb befindet und die Parksperrenklinke nicht eingerückt werden soll.

Die Getriebesteuerung 3 ist so ausgebildet, dass sie den Wunsch des Fahrers erkennen kann, dass die Parksperrenklinke eingerückt werden soll.

Wenn sich das Fahrzeug im normalen Fahrbetrieb befindet, dann wird über den Ausgang 4 das rückfallverzögerte Zeitrelais 5 mit Strom versorgt, so dass der Stromkreislauf des Haltemagneten 2 geschlossen ist und der Haltemagnet 2 die Parksperrenklinke im ausgerückten Zustand hält. Im Falle eines Resets der Getriebesteuerung 3 während des normalen Fahrbetriebs fällt das über den Ausgang 4 an das rückfallverzögerte Zeitrelais 5 abgegebene Signal, bzw. der eingespeiste Strom ab, die Rückfallzeit des rückfallverzögerten Zeitrelais 5 ist aber so ausgewählt, dass während dieses Resets durch das Relais 5 der Stromkreislauf des Haltemagneten 2 nicht geöffnet wird und somit die Parksperrenklinke vom Haltemagneten 2 weiterhin im ausgerückten Zustand gehalten wird.

Wird aber von der Getriebesteuerung 3 erkannt, dass der Fahrer ein Einrücken der Parksperrenklinke erreichen möchte, wozu er beispielsweise den Wählhebel des Fahrzeugs in die Stufe "P" verschiebt, so wird über den Ausgang 6 das zweite Relais 7 mit Strom versorgt und der Stromkreislauf des Haltemagneten 2 sofort geöffnet, so dass die Parksperrenklinke über den Federspeicher unmittelbar eingelegt werden kann, ohne dass die Rückfallverzögerungszeit des Relais 5 abgewartet werden müsste.

Statt des vorstehend beschriebenen zweiten Relais 7 kann auch ein Transistor vorgesehen sein, der die Stromversorgung des Haltemagneten aktiv unterbricht und auf diese Weise der Federspeicher die Sperrklinke unmittelbar einrückt.

Fig. 2 der Zeichnung zeigt eine zweite Ausführungsform nach der vorliegenden Erfindung. Bei dieser Ausführungsform wurde das rückfallverzögerte Zeitrelais 5 nach der ersten Ausführungsform durch eine elektrische Schaltung 8 ersetzt.

Obwohl in Fig. 2 der Zeichnung ein zweites Relais 7, wie es nach der ersten Ausführungsform dargestellt ist, weggelassen wurde, ist es möglich, die in Fig. 2 der Zeichnung dargestellte elektrische Schaltung 8 mit einem solchen zweiten Relais zu kombinieren.

Die in Fig. 2 dargestellte elektrische Schaltung 8 weist ein Steuergerät 9, einen Optokoppler 10, eine Fahrzeugbatterie 11 und einen Haltemagneten 12 auf.

Von dem Steuergerät 9 sind in Fig. 2 der Zeichnung nur diejenigen Bauteile gezeigt, die für die vorliegende elektrische Schaltung von Bedeutung sind. Ein Mikrokontroller 13 ist dafür vorgesehen, über eine Sperrdiode 14 einen Feldeffekttransistor 15 so anzusteuem, dass dieser aktiv gegen Masse (Fahrzeugbatterie 11) schaltet. Bei geschaltetem Transistor 15 wird über einen den Ladestrom begrenzenden Widerstand 16 ein Kondensator 17 aufgeladen. Statt des Feldeffekttransistors kann auch ein Bipolartransistor eingesetzt werden.

Über den Transistor 15 wird ein Optokoppler 10, der als Stromverstärkung dient, so angesteuert, dass der Haltemagnet 12 über die Fahrzeugbatterie 1 mit Haltestrom versorgt wird und somit die nicht näher dargestellte Parksperrklinke im ausgerückten Zustand halten kann.

Wenn es nunmehr zu einem Reset des Steuergeräts 9 kommt, fällt das vom Mikrokontroller 13 gelieferte Signal kurzzeitig ab und der Kondensator 17 beginnt sich zu entladen. In diesem Fall wirkt der Kondensator 17 als Energiequelle für den Transistor 15, so dass über den Transistor 15 auch während des Resets weiterhin der Optokoppler 10 angesteuert wird, der wiederum den Haltemagneten 12 mit Haltestrom aus dem Bordspannungsnetz (Fahrzeugbatterie 11) versorgt. Wie es vorstehend bereits erläutert wurde, ist es auch bei dieser zweiten Ausführungsform möglich, ein zweites Relais - entsprechend dem zweiten Relais 7 nach der ersten Ausführungsform - vorzusehen, mit dem der Stromkreislauf des Haltemagneten 12 sofort geöffnet werden kann, wenn dies dem Fahrerwunsch entspricht.

Auch kann statt des zweiten Relais 7 ein Transistor 18 (beispielsweise ein npn Bipolartransistor) vorgesehen sein (siehe Fig. 2), der vom Mikrokontroller 13 angesteuert als Schalter fungiert und die Stromzufuhr zum Haltemagneten 12 sofort unterbricht, wenn dies dem Fahrerwunsch entspricht.

Mit beiden Ausführungsformen ist es möglich, einen Reset der Getriebesteuerung (das Steuergerät 9 kann integraler Teil der Getriebesteuerung 3 sein) zu überbrücken, so dass auch während eines Resets der Getriebesteuerung der Haltemagnet 12 mit Strom versorgt wird und ein unbeabsichtigtes Einrücken der Parksperrklinke sicher vermieden wird.

Die erfindungsgemäße Vorrichtung sowie das erfindungsgemäße Verfahren zeichnen sich daher dadurch aus, dass im Falle eines Stromausfalls, was einer Notfallsituation entspricht, die Parksperrklinke des Kraftfahrzeuggetriebes sicher eingelegt wird, die Parksperrklinke aber während eines Resets der Getriebesteuerung vom Haltemagneten im ausgerückten Zustand gehalten wird. Wenn es von der Getriebesteuerung erkannt wird, dass der Fahrer des mit der erfindungsgemäßen Vorrichtung ausgestatteten Fahrzeugs das Einlegen der Parksperre wünscht, so ist es nach der Erfindung vorgesehen, dass der Haltestromkreis des Haltemagneten sofort unterbrochen wird, ohne die maximale Rückfallverzögerungszeit eines rückfallverzögerten Zeitrelais oder die maximale Entladezeit des Kondensators der nach der Erfindung vorgesehenen elektrischen Schaltung abzuwarten.

Hinsichtlich vorstehend im Einzelnen nicht näher erläuterter Merkmale der Erfindung wird im Übrigen ausdrücklich auf die Ansprüche und die Zeichnung verwiesen.

## Patentansprüche

1. Vorrichtung zur Steuerung eines elektrisch betätigten Haltemagneten (2, 12) einer Parksperre eines Kraftfahrzeuggetriebes, bei der ein, über eine, in eine Grundeinstellung rücksetzbare (Reset), Getriebesteuerung (3), mit Strom versorgter Haltemagnet (2, 12) die Parksperre im ausgelegten Zustand hält, **gekennzeichnet durch** eine Einrichtung (5, 9) zur Überbrückung eines Resets der Getriebesteuerung (3), die während des Resets die Stromversorgung des Haltemagneten (2, 12) aufrecht erhält.

2. Vorrichtung nach Anspruch 1, **dadurch gekennzeichnet, dass** die Einrichtung (5, 9) die Stromversorgung des Haltemagneten (2, 12) in Abhängigkeit von einer Bedingung unterbricht, die anzeigt, dass die Parksperre einzulegen ist.

3. Vorrichtung nach Anspruch 1, **dadurch gekennzeichnet, dass** die Einrichtung ein rückfallverzögertes Zeitrelais (5) aufweist, dessen Rückfallverzögerungszeit in Abhängigkeit von der Resetzeitdauer einstellbar ist und während des Resets die Stromversorgung des Haltemagneten (2) aufrecht erhält.

4. Vorrichtung nach Anspruch 1, **dadurch gekennzeichnet, dass** die Einrichtung eine elektrische Schaltung (9) mit einem elektrischen Energiespeicher (17) aufweist, über dessen Energieabgabe während des Resets die Stromversorgung des Haltemagneten (2, 12) aufrecht erhalten bleibt.

5. Vorrichtung nach Anspruch 4, **dadurch gekennzeichnet, dass** der elektrische Energiespeicher ein Kondensator (17) ist.

6. Vorrichtung nach einem der Ansprüche 1 bis 5, **dadurch gekennzeichnet, dass** die Einrichtung ein Relais (7) oder einen Transistor (18) aufweist, das beziehungsweise der in Abhängigkeit von einer Bedingung, die anzeigt, dass die Parksperre einzulegen ist, bestromt ist und damit den Stromkreis des Haltemagneten (2, 12) unterbricht.

7. Elektrische Schaltung (9) mit einer Spannungsquelle (11) und einem elektrisch betätigten Haltemagneten (12), **gekennzeichnet durch** einen Mikrokontroller (13) und einen Transistor (15) sowie einen Kondensator (17), wobei der Mikrokontroller (13) den Transistor (15) ansteuert derart, dass der Transistor (15) den Versorgungsstrom des Haltemagneten (12) durchschaltet und der Kondensator (17) bei einem Reset der Schaltung (9) den Schaltzustand des Transistors (15) während des Resets unverändert aufrecht hält.

8. Elektrische Schaltung (9) nach Anspruch 7, **gekennzeichnet durch** einen Optokoppler (10), der vom Transistor (15) angesteuert den Versorgungsstrom des Haltemagneten (12) durchschaltet und der Kondensator (17) bei einem Reset der Schaltung (9) den Schaltzustand des Transistors (15) und des Optokopplers (10) während des Resets unverändert aufrecht hält.

9. Elektrische Schaltung nach Anspruch 7 oder 8, **gekennzeichnet durch** eine Diode (14), die eine Entladung des Kondensators (17) über den Mikrokontroller (13) verhindert.

10. Elektrische Schaltung nach einem der Ansprüche 7 bis 9, **gekennzeichnet durch** einen dem Kondensator (17) vorgeschalteten Widerstand (16) zur Begrenzung des Ladestroms des Kondensators (17).

11. Vorrichtung zur Steuerung eines elektrisch betätigten Haltemagneten (2, 12) einer Parksperre eines Kraftfahrzeuggetriebes, bei der ein, über eine, in eine Grundeinstellung rücksetzbare (Reset), Getriebesteuerung (3), mit Strom versorgter Haltemagnet (2, 12) die Parksperre im ausgelegten Zustand hält, mit einer elektrischen Schaltung (9) nach einem der Ansprüche 7 bis 10.

12. Kraftfahrzeuggetriebe mit einer Parksperre und einer Vorrichtung nach einem der Ansprüche 1 bis 6 oder 11.

13. Verfahren zur Steuerung eines elektrisch betätigten Haltemagneten (2, 12) einer Parksperre eines Kraftfahrzeuggetriebes, bei dem ein, über eine, in eine Grundeinstellung rücksetzbare (Reset), Getriebesteuerung (3), mit Strom versorgter Haltemagnet (2, 12) die Parksperre im ausgelegten Zustand hält, **dadurch gekennzeichnet, dass** während eines Resets der Getriebesteuerung (3) die Stromversorgung des Haltemagneten (2, 12) aufrecht erhalten wird.

14. Verfahren nach Anspruch 13, **dadurch gekennzeichnet, dass** die Stromversorgung des Haltemagneten (2, 12) in Abhängigkeit von einer Bedingung, die anzeigt, dass die Parksperre einzulegen ist, unterbrochen wird.

15. Verfahren nach Anspruch 14, **dadurch gekennzeichnet, dass** die Bedingung einem Fahrerwunsch entspricht, dass die Parksperre einzulegen ist und über eine von Fahrer ausgelöste Aktion erfüllt wird.

## Claims

1. Device for controlling an electrically activated holding magnet (2, 12) of a parking brake of a motor vehicle gearbox in which a holding magnet (2, 12) which is supplied with current via a gearbox controller (3) which can be reset into a basic setting holds the parking brake in the released state, **characterized by** an apparatus (5, 9) for bypassing reset of the gearbox controller (3) which maintains the power supply to the holding magnet (2, 12) during the reset.

2. Device according to Claim 1, **characterized in that** the apparatus (5, 9) interrupts the power supply of the holding magnet (2, 12) as a function of a condition which indicates that the parking brake is to be applied.

3. Device according to Claim 1, **characterized in that** the apparatus has a timer relay (5) which has delayed drop out and whose drop out delay time can be set as a function of the reset period and which maintains the power supply to the holding magnet (2) during the reset.

4. Device according to Claim 1, **characterized in that** the apparatus has an electrical circuit (9) with an electrical energy accumulator (17), by means of whose energy output the power supply to the holding magnet (2, 12) is maintained during the reset.

5. Device according to Claim 4, **characterized in that** the electrical energy accumulator is a capacitor (17).

6. Device according to one of Claims 1 to 5, **characterized in that** the apparatus has a relay (7) or a transistor (18) which is energized as a function of a condition which indicates that the parking brake is to be applied, thus interrupting the circuit of the holding magnet (2, 12).

7. Electrical circuit (9) having a voltage source (11) and an electrically activated holding magnet (12), **characterized by** a microcontroller (13) and a transistor (15) as well as a capacitor (17), wherein the microcontroller (13) actuates the transistor (15) in such a way that the transistor (15) connects through the power supply of the holding magnet (12) and in the case of a reset of the circuit (9) the capacitor (17) maintains the switched state of the transistor (15) without modification during the reset.

8. Electrical circuit (9) according to Claim 7, **characterized by** an optical coupler (10) which, under actuation by the transistor (15), connects through the power supply of the holding magnet (12), and in the case of a reset of the circuit (9) the capacitor (17) maintains the switched state of the transistor (15) and of the optical coupler (10) without modification during the reset.

9. Electrical circuit according to Claim 7 or 8, **characterized by** a diode (14) which prevents the capacitor (17) from discharging via the microcontroller (13).

10. Electrical circuit according to one of Claims 7 to 9, **characterized by** a resistor (16) which is connected upstream of the capacitor (17) and has the purpose of limiting the charging current of the capacitor (17).

11. Device for controlling an electrically activated holding magnet (2, 12) of a parking brake of a motor vehicle gearbox in which a holding magnet (2, 12) which is supplied with current via a gearbox controller (3) which can be reset into a basic setting holds the parking brake in the released state, having an electrical circuit (9) according to one of Claims 7 to 10.

12. Motor vehicle gearbox having a parking brake and a device according to one of Claims 1 to 6 or 11.

13. Method for controlling an electrically activated holding magnet (2, 12) of a parking brake of a motor vehicle gearbox, in which a holding magnet (2, 12) which is supplied with current via a gearbox controller (3) which can be reset into a basic setting holds the parking brake in the released state, **characterized in that** the power supply to the holding magnet (2, 12) is maintained during a reset of gearbox controller (3).

14. Method according to Claim 13, **characterized in that** the power supply to the holding magnet (2, 12) is interrupted as a function of a condition which indicates that the parking brake is to be applied.

15. Method according to Claim 14, **characterized in that** the condition corresponds to a driver's request that the parking brake is to be applied and is met by means of an action which is triggered by the driver.

## Revendications

1. Dispositif pour commander un électroaimant de maintien (2, 12) à commande électrique d'un frein de stationnement d'une boîte de vitesses de véhicule automobile, avec lequel un électroaimant de maintien (2, 12) alimenté électriquement par le biais d'une commande de boîte de vitesses (3) qui peut être ramenée dans une position de base (réinitialisée) maintient le frein de stationnement en position désengagée, **caractérisé par** un dispositif (5, 9) pour court-circuiter une réinitialisation de la commande de boîte de vitesses (3) qui maintient l'alimentation électrique de l'électroaimant de maintien (2, 12) pendant une réinitialisation.

2. Dispositif selon la revendication 1, **caractérisé en ce que** le dispositif (5, 9) interrompt l'alimentation électrique de l'électroaimant de maintien (2, 12) en fonction d'une condition qui indique qu'il faut engager le frein de stationnement.

3. Dispositif selon la revendication 1, **caractérisé en ce que** le dispositif présente un relais temporisé (5) à rappel retardé dont le temps de retard du rappel peut être réglé en fonction de la durée de réinitialisation et qui maintient l'alimentation électrique de l'électroaimant de maintien (2, 12) pendant la réinitialisation.

4. Dispositif selon la revendication 1, **caractérisé en ce que** le dispositif présente un circuit électrique (9) muni d'un accumulateur d'énergie électrique (17) dont l'énergie délivrée permet de maintenir l'alimentation électrique de l'électroaimant de maintien (2, 12) pendant la réinitialisation.

5. Dispositif selon la revendication 4, **caractérisé en ce que** l'accumulateur d'énergie électrique est un condensateur (17).

6. Dispositif selon l'une des revendications 1 à 5, **caractérisé en ce que** le dispositif présente un relais (7) ou un transistor (18) qui est alimenté électriquement en fonction d'une condition qui indique qu'il faut engager le frein de stationnement et interrompt ainsi le circuit électrique de l'électroaimant de maintien (2, 12).

7. Circuit électrique (9) comprenant une source de tension (11) et un électroaimant de maintien (2, 12) à commande électrique, **caractérisé par** un microcontrôleur (13) et un transistor (15) ainsi que par un condensateur (17), le microcontrôleur (13) commandant le transistor (15) de telle sorte que le transistor (15) laisse passer le courant d'alimentation de l'électroaimant de maintien (12) et le condensateur (17), lors d'une réinitialisation du circuit (9), maintient l'état de commutation du transistor (15) inchangé pendant la réinitialisation.

8. Circuit électrique (9) selon la revendication 7, **caractérisé par** un optocoupleur (10) qui, commandé par le transistor (15), laisse passer le courant d'alimentation de l'électroaimant de maintien (12) et le condensateur (17), lors d'une réinitialisation du circuit (9), maintient l'état de commutation du transistor (15) et de l'optocoupleur (10) inchangé pendant la réinitialisation.

9. Circuit électrique selon l'une des revendications 7 ou 8, **caractérisé par** une diode (14) qui empêche la décharge du condensateur (17) par le biais du microcontrôleur (13).

10. Circuit électrique selon l'une des revendications 7 à 9, **caractérisé par** une résistance (16) branchée en amont du condensateur (17) pour limiter le courant de charge du condensateur (17).

11. Dispositif pour commander un électroaimant de maintien (2, 12) à commande électrique d'un frein de stationnement d'une boîte de vitesses de véhicule automobile, avec lequel un électroaimant de maintien (2, 12) alimenté électriquement par le biais d'une commande de boîte de vitesses (3) qui peut être ramenée dans une position de base (réinitialisée) maintient le frein de stationnement en position désengagée, comprenant un circuit électrique (9) selon l'une des revendications 7 à 10.

12. Boîte de vitesses pour véhicule automobile comprenant un frein de stationnement et un dispositif selon l'une des revendications 1 à 6 ou 11.

13. Procédé pour commander un électroaimant de maintien (2, 12) à commande électrique d'un frein de stationnement d'une boîte de vitesses de véhicule automobile, avec lequel un électroaimant de maintien (2, 12) alimenté électriquement par le biais d'une commande de boîte de vitesses (3) qui peut être ramenée dans une position de base (réinitialisée) maintient le frein de stationnement en position désengagée, **caractérisé en ce que** l'alimentation électrique de l'électroaimant de maintien (2, 12) est maintenue pendant une réinitialisation de la commande de boîte de vitesses (3).

14. Procédé selon la revendication 13, **caractérisé en ce que** l'alimentation électrique de l'électroaimant de maintien (2, 12) est interrompue en fonction d'une condition qui indique qu'il faut engager le frein de stationnement.

15. Procédé selon la revendication 14, **caractérisé en ce que** la condition correspond à un souhait du conducteur d'engager le frein de stationnement et elle est remplie par une action déclenchée par le conducteur.
